(19) Europäisches Patentamt
European Patent Office
Office européen des brevets

(11) EP 2 072 289 B1

(12) # EUROPEAN PATENT SPECIFICATION

(45) Date of publication and mention of the grant of the patent:
**27.10.2010 Bulletin 2010/43**

(51) Int Cl.:
***B60C 17/00*** *(2006.01)*

(21) Application number: **08021830.8**

(22) Date of filing: **16.12.2008**

(54) **Run-flat tire**

Reifen mit Notlaufring

Pneu de roulage à plat

(84) Designated Contracting States:
**DE**

(30) Priority: **17.12.2007 JP 2007324911**

(43) Date of publication of application:
**24.06.2009 Bulletin 2009/26**

(73) Proprietor: **Sumitomo Rubber Industries, Ltd.**
**Kobe-shi**
**Hyogo-ken (JP)**

(72) Inventor: **Miyazaki, Tatsuya**
**c/o Sumitomo Rubber Industries Ltd.**
**Kobe-shi**
**Hyogo-ken (JP)**

(74) Representative: **Manitz, Finsterwald & Partner GbR**
**Postfach 31 02 20**
**80102 München (DE)**

(56) References cited:
**JP-A- 2007 098 992** **JP-A- 2007 176 436**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 072 289 B1

## Description

The present invention relates to a run-flat tire that improves the various performances of a tire while attaining weight saving.

For example, a so-called side reinforcing type run-flat tire equipped with a side reinforcing rubber layer with sectional falcate shape at a sidewall part has been known as a run-flat tire capable of running at comparatively long distance even at deflate state in which air in a tire deflates because of blowout (for example, refer to the patent document 1).

The tire described in the patent document 1 adopts a plurality of carcass plies for enhancing load supporting ability, and since tire temperature at run-flat running is remarkably heightened in comparison with usual running at inflate state, rayon fiber cords excellent in heat resistance as carcass cords are used from the viewpoint of securing run-flat durability.

The tan δ, hardness and stress and elongation (%) at fracture by stretching of a rubber composition used for a clinch part are required to be improved for improving the cut resistance and crack growth resistance of the clinch part of a tire for an automobile and the low fuel consumption of a car.

Three members of an insert part (comprehensively determined by E*, insert thickness and shape of insert rubber), a bead apex part and a clinch part support load in the deflate durability test of a run-flat tire. The tread part of a tire is preferably hard including Brk rigidity (comprehensively determined by the weight of steel cords, angle, thickness between Brk and E* of Brk rubber compounding) so that a crown part is not warped. Ultra low tan δ compounding (tan δ = 0.03 to 0.07) is used for the insert part and bead apex. On the other hand, the clinch part compounds a fixed amount (compounding amount of at least 30 parts by weight based on 100 parts by weight of a rubber component) of reinforcing carbon black of about N300 (N300 to N399) for prevention of rim chafing (tan δ of the clinch part = about 0.10 to 0.20). Accordingly, aramid fiber cords (Kevlar (R)) excellent in heat resistance as carcass cord are used in the carcass of the run-flat tire, and even if elastic modulus is maintained at high temperature zone around at 200°C, separation between the clinch part/carcass occurs owing to the exothermic heat of the clinch part and, namely, fracture occurs between the carcass cord-covering rubber and the clinch rubber.

In order to improve run-flat durability, there are considered countermeasures of (1) hardening the clinch part and preventing the bending of the clinch part at deflate running, (2) making the insert part be ultra low heat build-up and subjecting load with the insert part to suppress the temperature rise of the whole tire, (3) making the clinch part and the insert part be ultra low heat build-up and subjecting load with the whole sidewall part to suppress the temperature rise of the whole tire, and (4) not elongating the carcass cords even at high temperature state even if a tire carries out deflate running to suppress the elongation of the insert part and suppressing the generation of the crack of the insert part.

However, the above-described countermeasure for hardening (1) a clinch part and preventing the bending of the clinch part at deflate running lowers fatally the elongation at break EB of the clinch part and there is possibility that the clinch part is damaged at assembling rim; therefore complementary measures such as the arrangement of canvas chafer having strong strength and thick top thickness or the loosing of the inner diameter of bead core are necessary in the run-flat tire.

In (4), aramid fiber cords (Kevlar (R)) are preferably used.

There has been no combination of the technology (2) for aiming the ultra low exothermic heat of the clinch part and the insert part and (3) with the technology (4) for using aramid fiber cords as the carcass cords, hitherto.

[Patent document 1] Japanese Unexamined Patent Publication No. 2000-351307 A run-flat tire disclosing the features of the preamble of claim 1 is known e.g. from JP-A-2007-176436.

Further improvement of run-flat durability and steering stability has been strongly desired because of tendency to high speed and long distance in recent run-flat running.

Consequently, it is the purpose of the present invention to suppress the exothermic heat of the insert part (and the clinch part) at deflate running by using the aramid fiber cords as carcass cords in the carcass of a run-flat tire and having the clinch part with low tan δ in combination and to suppress the crack of the insert part together, and to improve the separation performance of the clinch part.

Further, it is an object to provide a run-flat tire capable of attaining high speed and long distance at run-flat running by enhancing steering stability and durability at run-flat running while designating weight saving in a run-flat tire, based on the use of the aramid fiber cords excellent in heat resistance and high elasticity in comparison with rayon fiber cords as carcass cords.

In order to achieve the above described object, the run-flat tire according to the invention of Claim 1 of the present application is a run-flat tire equipped with a carcass from a tread part to the bead core of a bead part through a sidewall part, a belt layer provided at the inside of the tread part and the radial outside of the carcass, a side-reinforcing rubber layer with sectional falcate shape provided at the inside of the sidewall part and carcass and extending from a central part having the maximum thickness to the inside and outside of radial direction decreasing thickness and a clinch part brought in contact with the rim flange of a metal wheel at a zone from the sidewall part to the bead part, and is characterized in that the carcass includes a carcass ply in which carcass cords arranged at an angle of 70 to 90° for tire

circumferential direction are covered with topping rubber, aramid fiber cords are used for the carcass cords, and the rubber physical properties of the clinch part are a tan δ of at most 0.13 measured at a temperature of 70°C and a dynamic distortion of 2 % and a complex elastic modulus E* of 5.0 to 10.0 Mpa.

The invention of Claim 2 is characterized in comprising a rubber composition for clinch wherein the clinch part includes a rubber component including (a) 20 to 60 % by weight of polybutadiene rubber including 2.5 to 20 % by weight of 1,2-syndiotactic polybutadiene crystal, (b) 5 to 40 % by weight of a tin-modified polybutadiene rubber in which it is polymerized by a lithium initiator, a content of tin atom is 50 to 3000 ppm, a vinyl bond amount is 5 to 50 % by weight and a molecular weight distribution (Mw/Mn) is at most 2 and (c) 20 to 75 % by weight of a rubber other than (a) and (b).

The invention of Claim 3 is characterized in that the carcass cords have a double strand structure in which 2 filament bundles lower twisted are mutually twisted with upper twisting.

The invention of Claim 4 is characterized in that the carcass cords have a twisting coefficient T indicated by the following formula (1) of a range of 0.5 to 0.7:

$$T = N \times \sqrt{\{(0.125 \times D/2)/\rho\}} \times 10^{-3} \qquad (1)$$

(wherein N is upper twisting number (cycle/10 cm), D is total indication decitex (fineness) and ρ is the specific gravity of cord material) .

The invention of Claim 5 is characterized in that the carcass cords have a twisting coefficient T of 0.6 to 0.7.

The invention of Claim 6 is characterized in that the topping rubber of the carcass ply has a complex elastic modulus E* of 5.0 to 13 Mpa.

The invention of Claim 7 is characterized in that it is a run-flat tire equipped with the side-reinforcing rubber layer with sectional falcate shape provided at the sidewall part and carcass and extending from a central part having the maximum thickness to the inside and outside of radial direction decreasing thickness.

The invention of Claim 8 is characterized in that the profile of the tire outer face is formed by curved surface comprising a plurality of arcs in which a curvature radius is gradually decreased from a tire equatorial point CP being the intersection of the tire outer face with the tire equatorial point C to earth edge side.

The invention of Claim 9 is characterized in that the profile of the tire outer face satisfies relation that when a point on the tire outer face separated from tire equatorial face C by a distance of 45 % of tire maximum sectional width SW is referred to as P, the curvature radius RC of the tire outer face is gradually decreased from the tire equatorial point CP to the point P and when respective radial distances between the tire equatorial point CP and respective points on the tire outer face respectively separating the distances X60, X75, X90 and X100 of 60 %, 75 %, 90 % and 100 % of half width (SW/2) of the tire maximum sectional width SW from the tire equatorial face C are referred respectively to as Y60, Y75, Y90 and Y100 and when the tire sectional height is referred to as SH,

$0.05 < Y60/SH \leq 0.1$

$0.1 < Y75/SH \leq 0.2$

0.2 < Y90/SH s 0.4

$0.4 < Y100/SH \leq 0.7$.

The invention of Claim 10 is characterized in that the profile of the tire outer face is that the curvature radius at an earth edge side is larger than a curvature radius at the tire equatorial point CP being the intersection of the tire outer face with the tire equatorial face C.

The run-flat tire of the present invention adopts aramid fiber cords particularly excellent in heat resistance as carcass cords in carcass ply, and the rubber physical properties of the clinch part is characterized in a tan δ of at most 0.13 measured at a temperature of 70°C and a dynamic distortion of 2 % and a complex elastic modulus E* of 5.0 to 10.0 Mpa.

The exothermic heat of the insertion part (particularly, clinch part) at the deflate running is suppressed by using aramid fiber cords as the carcass cords in the carcass of the run-flat tire and a clinch part with low tan δ in combination, the crack of the insertion part is suppressed and the separation performance of the clinch part can be improved.

Further, cord damage caused by temperature rise at the run-flat running can be suppressed particularly in the run-flat tire. Furthermore, since the aramid fiber cords are highly elastic and can enhance load-supporting ability, tire deformation at run-flat can be reduced while designing the reduction of ply sheet number (light weight), and run-flat durability can be enhanced in addition to the improvement of the above-described heat resistance. Further, steering stability at run-flat running can be improved and high speed and long distance in the run-flat running can be attained.

Fig. 1 is the meridian section showing one Example of the run-flat tire of the present invention.
Fig. 2 is a sectional view showing the bead part of the run-flat tire of the present invention in magnification.
Fig. 3 is a sectional view showing the tread part of the run-flat tire of the present invention in magnification.

Fig. 4 is a side view illustrating the carcass cords of the run-flat tire of the present invention.
Fig. 5 is a diagram showing the profile of the tire outer face of the run-flat tire of the present invention.
Fig. 6 is a diagram showing the range of RYi at respective positions of the tire outer face of the run-flat tire of the present invention.

Symbols in the Drawings:

| | |
|---|---|
| 1 | Pneumatic tire |
| 1A | Run-flat tire |
| 2 | Tread part |
| 2A | Tire outer face |
| 3 | Sidewall part |
| 4 | Bead part |
| 5 | Bead core |
| 6 | Carcass |
| 6A | Carcass ply |
| 6a | Ply part |
| 6b | Ply folding part |
| 6bl | Bead side part among ply folding part |
| 6be | Outer edge part wound up exceeding the bead apex rubber to the outside of radial direction |
| 7 | Tread-reinforcing cord layer |
| 7e | Outer edge of tread-reinforcing cord layer |
| 8 | Bead apex rubber |
| 9 | Belt |
| 9A | Belt ply |
| 9B | Belt ply |
| 10 | Band |
| 11 | Side reinforcing rubber layer |
| 11a | Central part |
| 11i | Inner edge to tire radial direction |
| 11o | Outer edge to tire radial direction |
| 12 | Rim protect rib |
| 12c | Protrusion face part most protruded at the outside of tire axial direction |
| 12i | Slant face part at the inside of radial direction smoothly linked with the bead outside face |
| 12o | Slant face part at the outside of radial direction smoothly linked with the basis contour line |
| 20 | Carcass cord |
| 21 | Filament bundle |
| ha | Height to tire radial direction of the bead apex rubber from bead base line |
| j | Basis contour line |
| r | Curvature radius larger than the arc part of the rim flange |
| t | The maximum thickness of the side-reinforcing rubber layer |
| BL | Bead base line |
| C | Tire equatorial face |
| CP | Tire equatorial point being intersection between the tire outer face and the tire equatorial face |
| CW | Earth width being tire axis direction distance between the outermost edges to tire axis direction where the tire outer face is grounded |
| EW | Width to tire axis direction of the duplicate part of the ply folding part with the tread-reinforcing cord layer |
| JF | Rim flange |
| M | Tire maximum width point |
| P | Point on the tire outer face separated by a distance of 45 % of the tire maximum sectional width SW from the tire equatorial face |
| P60 | Point on the tire outer face of X60 and Y60 |
| P75 | Point on the tire outer face of X75 and Y75 |
| P90 | Point on the tire outer face of X90 and Y90 |
| P 100 | Point on the tire outer face of X100 and Y100 |
| RC | Curvature radius of tire outer face |

RY60 = Y60/ SH
RY75 = Y75/SH
RY90 = Y90/SH
RY100 = Y100/SH
SH Tire sectional height
SW Tire maximum sectional width
SW/2 Half width of the tire maximum sectional width from the tire equatorial face
SP Distance of 45 % of the tire maximum sectional width from the tire equatorial face
Wi Duplicate width to tire radial direction of side reinforcing rubber layer with bead apex rubber
X60 Distance of 60 % of half width of the tire maximum sectional width SW from the tire equatorial face
X75 Distance of 75 % of half width of the tire maximum sectional width SW from the tire equatorial face
X90 Distance of 90 % of half width of the tire maximum sectional width SW from the tire equatorial face
X100 Distance of 100 % of half width of the tire maximum sectional width SW from the tire equatorial face
Y60 Distance to radial direction between the tire equatorial point of X60
Y75 Distance to radial direction between the tire equatorial point of X75
Y90 Distance to radial direction between the tire equatorial point of X90
Y100 Distance to radial direction between the tire equatorial point of X100

The run-flat tire of the present invention adopts aramid fiber cords particularly excellent in heat resistance as carcass cords in carcass ply, and the rubber physical properties of the clinch part is characterized in a tan δ of at most 0.13 measured at a temperature of 70°C and a dynamic distortion of 2 % and a complex elastic modulus E* of 5.0 to 10.0 Mpa.

Firstly, the clinch part composing the run-flat tire of the present invention is illustrated.

The clinch part is provided at the inner end of the sidewall part composing tire outer coat, is a rubber part brought in contact with the rim flange of a metal wheel and has a role of preventing the abrasion of the clinch part caused by contact with the rim flange of a metal wheel. Furthermore, roles of mitigating interface between the rim flange of a metal wheel and bead wires with high rigidity invisible in the sidewall and suppressing deformation after repeating rolling are required for the clinch part in particular.

In the clinch rubber composing the clinch part in the run-flat tire of the present invention, the loss tangent tan δ of the clinch rubber measured at a temperature of 70°C and a dynamic distortion of 2 % is at most 0.13, preferably at most 0.12 and more preferably at most 0.11 in order to suppress the exothermic heat of a tire and not to increase rolling resistance. Further, the loss tangent tan δ of the clinch rubber measured at a temperature of 70°C and a dynamic distortion of 2 % is lower the better and its lower limit is not specifically limited.

In the clinch rubber composing the clinch part in the run-flat tire of the present invention, the complex elastic modulus E* of the clinch rubber measured at a temperature of 70°C and a dynamic distortion of 2 % is at least 5.0 Mpa, preferably at least 6.0 Mpa and more preferably at least 6.5 Mpa from reasons of suppressing rim chafing, suppressing the deformation of the tire bead part and bending the sidewall part (sidewall rubber and insert). Further, the complex elastic modulus E* of the clinch rubber measured at a temperature of 70°C and a dynamic distortion of 2 % is at most 10 Mpa, preferably at most 9.5 Mpa and more preferably at most 9.0 Mpa from reasons of keeping the rim and preventing damage.

The clinch rubber (rubber composition for clinch) composing the clinch part in the run-flat tire of the present invention includes preferably a rubber component including (a) a polybutadiene rubber including a 1,2-syndiotactic polybutadiene crystal, (b) a tin-modified polybutadiene rubber and (c) a rubber other than (a) and (b).

In the (a) polybutadiene rubber (BR (a)) including 1,2-syndiotactic polybutadiene crystal, 1,2-syndiotactic polybutadiene crystal are not those merely dispersing crystal in BR (a), but are preferably dispersed after forming chemical bonding with BR (a). The generation and propagation of crack tends to be suppressed by dispersing a crystal after chemically bonded with the rubber component.

The melting point of the 1,2-syndiotactic polybutadiene crystal is preferably at least 180°C and more preferably at least 190°C. When the melting point is less than 180°C, crystal is melted during the vulcanization of a tire in a press and hardness tends to be lowered. Further, the melting point of the 1,2-syndiotactic polybutadiene crystal is preferably at most 220°C and more preferably at most 210°C. When the melting point exceeds 220°C, the molecular weight of BR (a) is enlarged; therefore, dispersibility in the rubber composition tends to be deteriorated.

In BR (a), the content of an article insoluble in boiling n-hexane is preferably at least 2.5 % by weight and more preferably at least 8 % by weight. When the content is less than 2.5 % by weight, the adequate hardness of the rubber composition tends to be not obtained. Further, the content of an article insoluble in boiling n-hexane is preferably at most 22 % by weight, more preferably at most 20 % by weight, and further more preferably at most 18 % by weight. When the content exceeds 22 % by weight, the viscosity of BR (a) itself tends to be high and the dispersibility of BR (a) and filler in the rubber composition tends to be deteriorated. Hereat, the article insoluble in boiling n-hexane indicates the

1,2-syndiotactic polybutadiene crystal (SPBD) in BR (a).

In BR (a), the content of the 1,2-syndiotactic polybutadiene crystal is preferably at least 2.5 % by weight, and more preferably at least 10 % by weight. When the content is less than 2.5 % by weight, hardness tends to be inadequate. Further, the content of the 1,2-syndiotactic polybutadiene crystal is preferably at most 20 % by weight and more preferably at most 18 % by weight. When the content exceeds 20 % by weight, the BR (a) tends to be hardly dispersed in the rubber composition and processability tends to be deteriorated.

The content of BR (a) in the rubber component is preferably at least 10 % by weight, more preferably at least 15 % by weight, further preferably at least 20 % by weight and preferably at least 30 % by weight in particular. When the content is less than 10 % by weight, cutting resistance and crack growth resistance tend to be inferior. Further, the content of BR (a) is preferably at most 60 % by weight and more preferably at most 50 % by weight. When the content exceeds 60 % by weight, the tensile fracture of the rubber composition tends to be bad and it causes the decrease of content of BR (b) in the rubber composition; therefore, tan δ tends to be deteriorated.

The tin-modified polybutadiene rubber (b) (BR (b)) is obtained by carrying out the polymerization of 1,3-butadiene by a lithium initiator and then adding a tin compound, and further, the terminal of BR (b) is preferably bonded with a tin-carbon bond.

The lithium initiator includes lithium compounds such as alkyllithium, aryllithium, allyllithium, vinyllithium, organo tinlithium and organo nitrogenlithium compound. The BR (b) with high vinyl and low cis content can be prepared by using the lithium compound as the initiator of BR (b).

Examples of the tin compound include tin tetrachloride, butyltin trichloride, dibutyltin dichloride, dioctyltin dichloride, tributyltin chloride, triphenyltin chloride, diphenyldibutyltin, triphenyltin ethoxide, diphenyldimethyltin, ditolyltin dichloride, diphenyltin dioctanoate, divinyldiethyltin, tetrabenzyltin, dibutyltin distearate, tetraallyltin and p-tributyltinstyrene. Among these, one or at least two can be selected to be used.

The content of tin atoms in the BR (b) is preferably at least 50 ppm and more preferably at least 60 ppm. When the content is less than 50 ppm, effect for promoting the dispersion of carbon black in the BR (b) tends to be little and tan δ tends to be deteriorated. Further, the content of tin atoms is preferably at most 3000 ppm, more preferably at most 2500 ppm and further preferably at most 250 ppm. When the content exceeds 3000 ppm, the kneaded article tends to be bad in cohesiveness and edge tends not to be trimmed; therefore the extrusion property of the kneaded article tends to be deteriorated.

The molecular weight distribution (Mw/Mn) of BR (b) is preferably at most 2, and more preferably at most 1.5. When Mw/Mn exceeds 2, the dispersibility of carbon black and tan δ tend to be deteriorated.

The vinyl bond amount in BR (b) is preferably at least 5 % by weight and more preferably at least 7 % by weight. When the content is less than 5 % by weight, the polymerization (production) of BR (b) tends to be difficult. Further, the vinyl bond amount is preferably at most 50 % by weight, and more preferably at most 20 % by weight. When the vinyl bond amount exceeds 50 % by weight, abrasion resistance (abrasion resistance at friction of the clinch rubber with rim) tends to be remarkably deteriorated.

The content of BR (b) in the rubber component is preferably at least 5 % by weight, and more preferably at least 10 % by weight. When the content is less than 5 % by weight, effect of reducing tan δ tend to be not obtained adequately. Further, the content of BR (b) is preferably at most 40 % by weight and more preferably at most 35 % by weight. When the content exceeds 40 % by weight, the reduction effect of tan δ is not improved, the total content of the rubber (c) and BR (a) is less than 60 % and tensile strength and hardness tends to be lowered.

The rubber (c) is a rubber other than BR (a) and BR (b). Specifically, it includes a natural rubber (NR), an isoprene rubber (IR), a styrene-butadiene rubber (SBR) and a high cis 1,4-polybutadiene rubber other than BR (a) and BR (b). Among these, a natural rubber is preferable because tensile strength is excellent.

The content of the rubber (c) in the rubber component is preferably at least 20 % by weight, and more preferably at least 30 % by weight. When the content is less than 20 % by weight, adequate tensile strength tends to be not obtained. Further, the content of BR (c) in the rubber component is preferably at most 75 % by weight, and more preferably at most 60 % by weight. When the content exceeds 75 % by weight, the total content of BR (a) and BR (b) is at most 25 % and the reduction of tan δ and the improvement of hardness tends to be not attained.

The tan δ can be greatly reduced by preparing the rubber component combining the above-described BR (a), BR (b) and rubber (c), without reducing the hardness, stress at break and stress at fracture of the rubber composition.

The clinch rubber (rubber composition for clinch) composing the clinch part in the run-flat tire of the present invention can include fillers for reinforcement such as carbon black, silica, calcium carbonate and clay, a softening agent such as aroma oil, wax, an antioxidant, stearic acid, zinc oxide, a vulcanizing agent such as sulfur and chemicals such as a vulcanization accelerator if necessary, in addition to the rubber composition.

The clinch rubber (rubber composition for clinch) composing the clinch part in the run-flat tire of the present invention can reduce further greatly tan δ by preparing the rubber component combining the above-described BR (a), BR (b) and rubber (c) and further lowering the content of the fillers for reinforcement to 25 to 50 parts by weight based on 100 parts by weight of the rubber component, without reducing the hardness, stress at break and stress at fracture

of the rubber composition.

The clinch rubber (rubber composition for clinch) composing the clinch part in the run-flat tire of the present invention is used for the clinch part of a tire and can produce a tire because crack growth resistance at repeating deformation under high strain is good at a wide temperature zone (-50 to 100°C) among tire members and the tan δ is reduced.

The nitrogen adsorption specific surface area ($N_2SA$) of carbon black compounded in the clinch rubber (rubber composition for clinch) is preferably 70 to 125 $m^2/g$. When $N_2SA$ is less than 70 $m^2/g$, abrasion resistance tends to be deteriorated and when it exceeds 125 $m^2/g$, tan δ tends to be deteriorated.

Further, the content of carbon black compounded in the clinch rubber (rubber composition for clinch) is preferably 40 to 60 parts by weight. When the content is less than 40 parts by weight, hardness tends not to be adequate and abrasion resistance in rim tends to be deteriorated and when the content exceeds 60 parts by weight, tan δ tends to be deteriorated.

The clinch rubber (rubber composition for clinch) composing the clinch part in the run-flat tire of the present invention can obtain a tire by compounding and kneading the rubber composition and the above-described various chemicals if necessary, extruding and molding and processing the composition in match with the shape of the sidewall or clinch of a tire at an unvulcanized stage, forming an unvulcanized tire on a tire molding machine, and heating and pressuring the unvulcanized tires in a vulcanizer.

The fiber cords mean fiber cords covering the rubber composition of the present invention when the rubber composition (rubber composition for covering carcass cords) composing the topping rubber covering the carcass cords in the run-flat tire of the present invention is used as carcass or belt. Specifically, they are those obtained by raw materials such as polyester, nylon, rayon, polyethylene terephthalate and aramid. Among these, polyester and aramid are preferable as the raw material of the fiber cords from reasons of being excellent in thermal stability and further being moderate price.

The aramid fiber cords are used in the run-flat tire of the present invention because elastic modulus at great deformation in deflate running is high.

The aramid fiber cords are Kevlar (R) manufactured by Toray-Du Pont Co., Ltd.

Then, one Embodiment of the run-flat tire of the present invention is illustrated together with examples shown in the drawings.

Fig. 1 is the meridian sectional view of a tire at normal inner pressure state showing a case that a pneumatic tire 1 is the run-flat tire 1A of the present invention.

In Fig. 1, the run-flat 1A of the present Embodiment is equipped with a carcass 6 from a tread part 2 to the bead core 5 of a bead part 4 through a sidewall part 3 and a tread-reinforcing cord layer 7 provided at the inside of the tread part 2 and at the outside of radial direction of the carcass 6.

The carcass 6 is formed by at least one of carcass ply obtained by covering carcass cords arranged at an angle of 70 to 90° against tire circumferential direction, with topping rubber. In the present example, there is shown a case in which the carcass cords comprise one carcass ply 6A arranged at an angle of 80 to 90°. The carcass ply 6A is equipped in series with a ply folding part 6b that is folded from the inside of tire axis direction to outside around the bead core 5 at both sides of the ply main body part 6a straddling between the bead cores 5 and 5.

Between the ply main body part 6a and the ply folding part 6b, there is provided a bead apex rubber 8 for bead reinforcement that comprises, for example, a hard rubber with a rubber hardness of 65 to 98 degree and extends dwindlingly from the bead core 5 to the outside of radial direction. In the present specification, the "rubber hardness" means hardness measured at a temperature of 23°C with a durometer type A. The height ha to tire radial direction of the bead apex rubber 8 from bead base line BL is not specifically limited, but when it is too small, run-flat durability is inadequate and to the contrary, when it is too large, there is fear that the excessive increase of tire mass and the deterioration of ride quality is induced. From the viewpoints, the height ha of the bead apex rubber 8 is 10 to 60 % of tire sectional height SH and more preferably 20 to 50 % is desired.

In the present example, the ply folding part 6b of the carcass 6 is wound up exceeding the bead apex rubber 8 to the outside of radial direction and its outer edge part 6be is equipped with a so-called high turn-up folding structure in which it is terminated by being sandwiched between the ply main body part 6a and the tread-reinforcing cord layer 7. Thereby, the sidewall part 3 can be effectively reinforced using one carcass ply 6A. Further, since the outer edge part 6be of the ply folding part 6b is separated from the sidewall part 3 greatly bent at run-flat running, damage originated from the outer edge part 6be can be preferably suppressed. The width EW to tire axis direction of the duplicate part of the ply folding part 6b with the tread-reinforcing cord layer 7 is at least 5 mm and preferably at least 10 mm and its upper limit is at most 40 mm and preferably at most 30 mm from the viewpoint of weight saving. Further, when the carcass 6 is formed by a plurality of carcass plies, it is preferable that at least one carcass ply assumes the mode.

Then, in the present example, the tread-reinforcing cord layer 7 is composed of a belt 9 doubly placed on the carcass 6 and a band 10 doubly placed at its outside. The belt 9 is formed by at least 2 and in the present example, 2 belt plies 9A and 9B covering belt cords arranged, for example, at an angle of 10 to 45° against tire circumferential

direction with topping rubber. Respective belt cords enhance belt rigidity by mutually crossing between plies and reinforce firmly about the whole width of the tread part 2 with laggen-gird effect.

Further, the band 10 comprises at least one band ply covering band cord spirally wound at an angle of at most 5° against the tire circumferential direction with topping rubber, retains the belt 9 and improves steering stability and high speed durability. The band ply includes a pair of right and left edge band plies covering only the outer edge part of the belt 9 to tire axial direction and a full bad ply covering about the whole width of the belt 9 and these are used alone or used in combination. In the present example, the band 10 comprising one full band ply is exemplified. Further, the tread-reinforcing cord layer 7 can be formed only by the belt 9 and also only by the band 10.

Further, the sidewall part 3 is provided with side-reinforcing rubber layer 11 for securing run-flat function. The side-reinforcing rubber layer 11 forms a sectional falcate shape that gradually decreases respectively to be extended from the central part 11a having maximum thickness to the inner edge 11i and the outer edge 11o to tire radial direction. The inner edge 11i is situated at the inside to the tire radial direction than the outer edge of the bead apex rubber 8 and the outer edge 11o is situated at the inside to tire axial direction than the outer edge 7e of the tread-reinforcing cord layer 7. At this time, it is preferable that a duplicate width Wi to tire axial direction of the side-reinforcing rubber layer 11 with the bead apex rubber 8 is 5 to 50 mm and a duplicate width Wo to tire axial direction of the side-reinforcing rubber layer 11 with the tread-reinforcing cord layer 7 is 0 to 50 mm, and thereby, the generation of rigidity bump at the outer edge 11o and the inner edge 11i is suppressed.

In the present example, the side-reinforcing rubber layer 11 is provided at the inside (tire inner cavity side) of the ply main body part 6a of the carcass 6. Accordingly, compressive load acts mainly for the side-reinforcing rubber layer 11 at the bending deformation of the sidewall part 3 and tensile load acts mainly for the carcass ply 6A having a cord material. Since a rubber is strong for compressive load and the cord material is strong for tensile load, the provision structure of the above-mentioned side-reinforcing rubber layer 11 enhances efficiently the bending rigidity of the sidewall part 3 and can effectively reduce the longitudinal bending of a tire at run-flat running. Further, the rubber hardness of the side-reinforcing rubber layer 11 is preferably at least 60 degree and further preferably 65 at least degree. When the rubber hardness is less than 60 degree, compressive strain at the run-flat running is enlarged and the run-flat performance becomes inadequate. Inversely, even if the rubber hardness is too high, the longitudinal spring constant of a tire is excessively raised and lowers ride quality. From these viewpoints, the upper limit of the rubber hardness of the side-reinforcing rubber layer 11 is at most 90 degree, and preferably at most 80 degree. Further, the maximum thickness t of the side-reinforcing rubber layer 11 is suitably set depending on a tire size and the category of a tire but is generally 5 to 20 mm in case of a tire for an automobile.

Fig. 2 is a sectional view showing the bead part of the run-flat tire of the present invention in magnification.

Fig. 3 is a sectional view showing the tread part of the run-flat tire of the present invention in magnification.

In the present example, a case in which rim protect rib 12 is protrudingly provided at the bead part 4 is exemplified. As shown in Fig. 2, the rim protect rib 12 is a rib body protruded from basis contour line j so as to cover a rim flange JF, and forms a sectional trapezoidal shape that is surrounded by a protrusion face part 12c most protruded at the outside of tire axial direction over the edge of the rim flange JF, a slant face part 12i at the inside of radial direction smoothly linked with the bead outside face from the protrusion face part 12c and a slant face part 12o at the outside of radial direction smoothly linked with the basis contour line j at a nearby the tire maximum width point M from the protrusion face part 12c. Further, the slant face part 12i at the inside is formed by a concave arc face formed by a curvature radius larger than the arc part of the rim flange JF, and protects the rim flange JF from curbstones at usual running. Further, since the slant face part 12i is recliningly brought in contact with the arc part of the rim flange JF at the run-flat running, bead deformation quantity can be reduced and is of help to the improvement of steering stability at the run-flat and run-flat durability.

Further, in the present invention, aramid fiber is used in order to improve the steering stability at the run-flat and run-flat durability.

The aramid fiber is known as high elastic fiber and can enhance the load supporting ability of a tire by using it to the carcass cords of the run-flat tire 1A. Consequently, while the weight saving of a tire is carried out, for example, by the reduction of the sheet number of the carcass ply, the diameter narrowing of carcass cords, and/or cord arrangement density (cord end number), tire deformation at the run-flat can be reduced. Furthermore, the aramid fiber is little in the lowering of elastic modulus under high temperature of 100 to 150°C in comparison with other organic fiber cord materials and has characteristic that it is excellent in heat resistance. Accordingly, it can be prevented that the strength of the carcass cords is lowered to induce damage by the temperature rise of a tire at the run-flat running and the further temperature rise of a tire in accordance with it is induced. As a result, the run-flat durability can be improved. Further, since it keeps high elastic modulus even by the temperature rise of a tire and enhances tire rigidity, the steering stability at the run-flat can be also improved. Thereby, speeding up and distance elongation at the run-flat running is attained.

Fig. 4 is a side view illustrating the carcass cords of the run-flat tire of the present invention.

Since the aramid fiber is high in elastic modulus, fatigue resistance tends to be inferior. Consequently, in the present example, as casually shown in Fig. 4, two twisting structure in which two filament bundles 21 (that is, strand 21)

of the aramid fiber lower twisted are mutually twisted by upper twisting is adopted for the carcass cords 20, and the twisting at this time is carried out by higher twisting coefficient T than conventional one.

Herein, as known well, the "twisting coefficient T" is indicated by the following formula (1) when the upper twisting number of cord is N (unit: cycle/ 10 cm), the total display decitex (fineness) of one cord is D (unit: dtex) and the specific gravity of a cord material is ρ.

$$T = N \times \sqrt{\{(0.125 \times D/2)/\rho\}} \times 10^{-3} \qquad (1)$$

Further, fatigue resistance being the defect of the aramid fiber cord can be improved by enhancing the twisting coefficient T to a range of 0.5 to 0.7 and the run-flat durability can be greatly improved in comparison with conventional rayon cord. Further, when the twisting coefficient T of the carcass cord 20 is lower than 0.5, the improvement effect of fatigue resistance is little and the run-flat durability cannot be adequately enhanced. To the contrary, when the twisting coefficient T exceeds 0.7, the twisting processing of cords is difficult and not advantageous for productivity. In particular, the lowest limit of the twisting coefficient T is preferably at least 0.6, thereby, the fatigue resistance of cord is further improved and the run-flat durability can be further improved.

Further, the double twisting structure is adopted for the carcass cords 20 in order to exhibit excellent reinforcement effect by making the most use of high elasticity that is the important characteristic of the aramid fiber. At that time, so-called balance twisting in which a lower twisting number and an upper twisting number are equal is preferable, but the ratio of twisting (lower twisting number/upper twisting number) is within a range of 0.2 to 2.0 and preferably 0.5 to 1.5 and the lower twisting number and the upper twisting number may be different.

Further, the total display decitex D (fineness) is not specifically limited, but is preferably a range of 1500 to 5000 dtex in case of the run-flat tire. Further, the product of a cord end number n (piece/5 cm) in the carcass ply 6A with the total display decitex D is preferably a range of 70000 to 150000 and when it is less than 70000, the run-flat durability and steering stability is inadequate even though the aramid fiber is used. Inversely, when it exceeds 150000, carcass rigidity is excessively large, ride quality is damaged and the unnecessary increase of mass and cost is induced. The lower limit of the product D x n is further preferably at least 100000 and the upper limit is further preferably at most 120000.

Further, the damage of the carcass cords 20 caused by the fatigue resistance is easily generated at a site subjecting compressive strain at tire deformation, namely bead side part 6bl among the ply folding part 6b. However, since the rim protect rib 12 is protrudently provided at the bead part 4 as previously described, bead deformation at the run-flat running is reduced and compressive strain acts hardly for the carcass cords 20. As a result, the fatigue damage of the carcass cords 20 at adopting the aramid fiber can be further suppressed and the run-flat durability can be further improved. In other word, it is preferable from the viewpoint of suppressing the fatigue damage of cord that the rim protect rib 12 is used for the tire using the carcass cords 20 of the aramid fiber.

Further, in the present example, a higher elastic rubber with complex elastic modulus E* of 5 to 13 Mpa in comparison with a conventional carcass topping rubber is adopted as the topping rubber of the carcass ply 6A. Further, the complex elastic modulus E* of a conventional carcass topping rubber is about 3.8 Mpa. Thus, strain applied to the carcass cords 20 at tire deformation can be reduced by adopting the high elastic rubber as a topping rubber and the further improvement of the run-flat durability can be attained. Further, when the complex elastic modulus E* is less than 5 Mpa, the above-described effect cannot be expected and inversely, when it exceeds 13 Mpa, the rubber is too hard and ride quality is deteriorated at a breath. From the viewpoints, the lower limit of the complex elastic modulus E* is at least 5.5 MPa, and further preferably at least 6 MPa, and the upper limit is at most 11 Mpa, and further preferably at most 9 MPa.

Then, in the meridian sectional view of a tire at the normal inner pressure state, the profile of the tire outer face 2A is formed by curved face comprising a plurality of arcs with different curvature radii. In particular, in case of the run-flat tire 1A, the profile is preferably formed by curved surface comprising a plurality of arcs in which curvature radius R is gradually decreased from a tire equatorial point CP being intersection between the tire outer face 2A and the tire equatorial face C to earth edge Te side. Thereby, the rubber volume of the side-reinforcing rubber layer 11 is suppressed to minimum and the weight saving of a tire and the improvement of ride quality can be designed. In particular, the effect can be further highly exhibited by adopting the specific profile presented in Japanese Patent Publication No. 2994989.

Fig. 5 is a diagram showing the profile of the tire outer face of the run-flat tire of the present invention.

It is specifically illustrated. Firstly as shown in Fig. 5, when a point on the tire outer face 2A separated by a distance SP of 45 % of the tire maximum sectional width SW from the tire equatorial face C is referred to as P, the curvature radius RC of the tire outer face 2A is set so as to be gradually decreased from the tire equatorial point CP to the point P. Further, the "the tire maximum sectional width SW" is the maximum width at the basis contour line j of the tire outer face 2A, and the basis contour line j means smooth contour line excluding local irregularity parts such as, for example, fine ribs and grooves for decoration and information indicating characters, figures and codes, the rim protect

rib 12 for preventing the removal of rim and a side protect rib for preventing cut blemish.

Further, points on the respective tire outer faces 2A that are respectively separated by distances X60, X75, X90 and X100 of 60 %, 75 %, 90 % and 100 % of the half width (SW/2) of the tire maximum sectional width SW from the tire equatorial face C are referred to as P60, P75, P90 and P100. Further, distances to radial direction between the points P60, P75, P90 and P100 on the tire outer face 2A and the tire equatorial point CP are referred to as Y60, Y75, Y90 and Y100.

Fig. 6 is a diagram showing the range of RYi at respective positions of the tire outer face of the run-flat tire of the present invention.

Further, when the tire sectional height that is height to radial direction from the bead base line BL to the tire equatorial point CP at normal inner pressure state is referred to as SH, it is characterized in that the distances to radial direction Y60, Y75, Y90 and Y100 satisfy the following relation respectively,

$0.05 < Y60/SH \leq 0.1$

$0.1 < Y75/SH \leq 0.2$

$0.2 < Y90/SH \leq 0.4$

$0.4 < Y100/SH \leq 0.7$,

wherein RY60 = Y60/SH

RY75 = Y75/SH

RY90 = Y90/SH

RY100 = Y100/SH, range RYi satisfying the relation are exemplified in Fig. 6. As shown in Figs. 5 and 6, since tread is very rounded in the profile satisfying the above-described relation, foot print is vertically long elliptical shape in which earth width is small and earth length is large, and it is reported in the above-described Japanese Patent No. 2994989 that noise performance and hydroplaning performance can be improved. Further, when the values of RY60, RY75, RY90 and RY100 are less than respective lower limit values, the tire outer face 2A centering on the tread part 2 is planarized; therefore the difference of profile with a conventional tire is lessened. Inversely, when it exceeds respective upper limit values, the tire outer face 2A is remarkably convex centering on the tread part 2; therefore earth width is excessive small and running performance necessary for usual running cannot be secured.

Further, since the tire flat rate, tire maximum sectional width and tire maximum height are generally determined from the specification of tire such as JATMA and ETRTO, the ranges of RY60, RY75, RY90 and RY100 can be easily calculated. The tire outer face 2A can be suitably determined by drawing with smooth curve from the tire equatorial point CP to the point P so as to satisfy the ranges of Y60, Y75, Y90 and Y100 at respective positions and so that curvature radius is gradually decreased.

Further, it is preferable for the tire that the earth width CW being tire axis direction distance between the outermost edges to tire axis direction where the tire outer face 2A is grounded is set as the range of 50 % to 65 % of the tire maximum sectional width SW at state in which a load of 80 % of the normal load is loaded on a tire under normal inner pressure state. This is because when the earth width CW is less than 50 % of the tire maximum sectional width SW, wandering performance is lowered such as easily wobbling with wheel ruts at normal running and biased abrasion occurs easily by heterogeneous earth pressure. Further, when the earth width CW exceeds 65 % of the tire maximum sectional width SW, earth width is excessively large and the compatibility of noise performance and hydroplaning performance becomes difficult.

Since the specific profile has characteristic that the zone of sidewall part is short, the rubber volume of the side-reinforcing rubber layer 11 can be reduced by adopting it to the run-flat tire and the lowering of mass in the run-flat tire and the improvement of ride quality can be attained. However, deformation quantity at the tread part 2 where rubber volume is large is enlarged in comparison with a tire having usual profile. Accordingly, the carcass cords of aramid fiber enhancing heat resistance can be more advantageous for a tire with specific profile.

The particularly preferable embodiments of the present invention were specifically described above, but the present invention is not limited to the embodiments illustrated and can be enforced by modifying it to various modes.

## EXAMPLES

The present invention is specifically illustrated based on Examples but the present invention is not limited only thereto.

Various chemicals used in Examples and Comparative Examples are illustrated below in summary. BR1250H: BR1250 available from ZEON Corporation (polymerization was carried out using lithium as an initiator, vinyl bond amount: 10 to 13 % by weight, Mw/Mn: 1.5, and the content of tin atom: 250 ppm) S-modified BR: Polybutadiene rubber modified with a compound represented by the chemical formula below (vinyl bond amount: 15 % by weight):

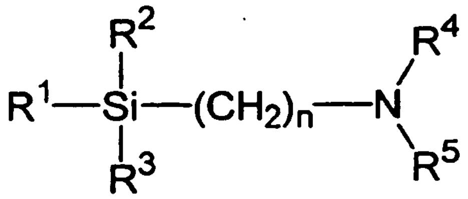

($R^1$=$R^2$=$R^3$=$C_2H_5O$-, $R^4$=$R^5$=H-, n=3)

VCR 617: VCR 617 available from Ube Industries, Ltd. (1,2-syndiotactic polybutadiene crystal dispersion, the content of 1,2-syndiotactic polybutadiene crystal: 17 % by weight, the melting point of the 1,2-syndiotactic polybutadiene crystal: 200°C, and the content of boiling n-hexane insoluble article: 15 to 18 % by weight)
High cis BR: BR150B available from Ube Industries, Ltd.
NR: Natural rubber TSR 20
Carbon N330: CARBON BLACK N330 ($N_2SA$: 78 $m^2/g$) available from Mitsubishi Chemical Corporation
Silica Z115Gr: Z115Gr ($N_2SA$: 115 $m^2/g$) available from Rhodia LTD. Silane coupling agent: Si-75 available from Degussa Hulls Corporation (Bis(3-triethoxypropyl)disulfide)
Insoluble sulfur: SEIMISULFUR available from Nihon Kanryu Industry Co., Ltd. (Insoluble content due to carbon disulfate of 60 %, and containing 10 % of oil)
Vulcanization accelerator TBBS: NOCCELER NS available from OUCHISHINKO CHEMICAL INDUSTRIAL CO., LTD.
Aroma oil: DIANA PROCESS AH-24 available from Idemitsu Kosan Co., Ltd.
Zinc oxide: ZINC OXIDE NO.1 available from Mitsui Mining and Smelting Co., Ltd.
Stearic acid: STEARIC ACID available from Nihon Oil & Fats Co., Ltd. Antioxidant 6C: NOCRAC 6C (N-1,3-dimethylbutyl-N'-phenyl-p-phenylenediamine) available from
OUCHISHINKO CHEMICAL INDUSTRIAL CO., LTD.
Aramid (carcass cord): Kevlar available from Toray-DuPont Co., Ltd.
(Aramid fiber cord, 1100 dtex/2, Cord end number: 53/5 cm)
Rayon (carcass cord): SUPER II available from Cord ENKA Co., Ltd.
(Rayon fiber cord, 1840 dtex/ 2, Cord end number: 51 / 5 cm)

EXAMPLES 1 to 8 and COMPARATIVE EXAMPLES 1 to 11

Chemicals other than sulfur and a vulcanization accelerator were kneaded according to the compounding prescription shown in Tables 1 and 2 under condition of a maximum temperature of 165°C for 5 minutes using a Banbury mixer to obtain kneaded articles. Sulfur and the vulcanization accelerator were added to the kneaded articles obtained and the mixture was kneaded under condition of maximum temperature of 97°C for 3 minutes to obtain unvulcanized rubber compositions for clinch. Then, run flat tires with a size of 245/40ZR18 having a structure shown in Fig. 1 were prepared by carrying out simultaneous extrusion molding of the unvulcanized rubber compositions for clinch and a sidewall part rubber and then vulcanizing under condition of 170°C for 12 minutes with a tire mold.
The run-flat durability test of respective test tires (Examples 1 to 8 and Comparative Examples 1 to 11) was carried out and the result was described in Table 1.

- Carcass: ply number (1) and cord angle (90°)
- Belt layer: belt ply number (2) and cord angle (+24°/-24°)
- Side-reinforcing rubber layer: rubber hardness (90 degree) and maximum thickness (10.0 mm)

In Table 1, the twisting coefficient T is represented by the following formula (1).

$$T = N \times \sqrt{\{(0.125 \times D/2)/\rho\}} \times 10^{-3} \qquad (1)$$

Further, the specific gravity ρ of rayon fiber cord is 1.51 and the specific gravity ρ of the aramid fiber cord is 1.44.
Further, tread profiles are RY60 = 0.05 to 0.1, RY75 = 0.1 to 0.2, RY90 = 0.2 to 0.4 and RY100 = 0.4 to 0.7 and those with substantially same profile are used.

(Viscoelasticity test)

Test pieces were cut out from the clinch part of tires, and the complex elastic modulus E* and loss tangent tan δ of the rubber test pieces at clinch part at 70°C were measured under the condition of an initial strain of 10 %, a dynamic strain of 2 % and a frequency of 10 Hz using a viscoelastic spectrometer manufactured by Iwamoto Seisakusyo K.K. Further, the larger the E* is, the higher the rigidity is, and it is indicated that steering stability is excellent. It is indicated that the smaller the tan δ is, the more excellent the low exothermic heat is.

(Tensile test)

Tensile test was carried out in accordance with JIS K 6251 "Vulcanized rubber and Thermoplastic rubber --- Determination method of tensile property", using No.3 dumbbell test pieces comprising vulcanized rubber compositions and the elongation at break $E_B$ (%) of respective test pieces was measured. Further, it is indicated that the larger the EB is, the more excellent it is.

(Run-flat durability (RF durability index))

The respective test tires were rim assembled in rim (18 x 8.5 J) from which valve core was removed, they ran on a drum tester under the condition of speed (90 km/h) and vertical load (5.74 K) at deflate state, running distance until the fracture of tires was measured, and they were by indices by referring Comparative Example 1 to 100. The larger the figure of the run flat (RF) durability index is, the more excellent the run-flat durability is.

TABLE 1

| | Examples | | | | | Comparative Examples | | | | |
|---|---|---|---|---|---|---|---|---|---|---|
| | 1 | 2 | 3 | 4 | 5 | 1 | 2 | 3 | 4 | 5 |
| Carcass cord | Aramid | Aramid | Aramid | Aramid | Aramid | Aramid | Aramid | Aramid | Aramid | Aramid |
| Compounding type | LRR | LRR | LRR | LRR | LRR | Normal | Normal | High E* | Low E* | Low E*, High tan δ |
| Compounding detail (parts by weight) | | | | | | | | | | |
| BR1250H | 20 | 40 | 20 | - | - | - | - | - | 20 | - |
| S-modified BR | - | - | - | - | - | - | - | - | - | - |
| VCR 617 | 45 | 25 | 45 | - | 65 | - | 65 | 65 | 45 | - |
| High cis BR | - | - | - | 65 | - | 65 | - | - | - | 65 |
| NR | 35 | 35 | 35 | 35 | 35 | 35 | 35 | 35 | 35 | 35 |
| Carbon N330 | 60 | 60 | 50 | 65 | 55 | 70 | 70 | 75 | 40 | 70 |
| Silica Z115Gr | - | - | 10 | - | - | - | - | - | - | - |
| Silane coupling agent | - | - | 0.8 | - | - | - | - | - | - | - |
| Insoluble sulfur (oil 10 % included) | 2.33 | 2.33 | 2.33 | 2.33 | 2.33 | 2.33 | 2.33 | 2.33 | 2.33 | 1.6 |
| Vulcanization accelerator TBBS | 2 | 2 | 2 | 3 | 2 | | 2 1.4 | 3 | 2 | 2 |
| Aroma oil | 8 | 8 | 8 | 8 | 8 | 8 | 8 | 8 | 8 | 8 |
| Zinc oxide | 2.5 | 2.5 | 2.5 | 2.5 | 2.5 | 2.5 | 2.5 | 2.5 | 2.5 | 2.5 |
| Stearic acid | 2 | 2 | 2 | 2 | 2 | 2 | 2 | 2 | 2 | 2 |
| Antioxidant 6C | 3 | 3 | 3 | 3 | 3 | 3 | 3 | 3 | 3 | 3 |
| Evaluation result | | | | | | | | | | |
| E* 70°C | 7.2 | 6.8 | 6.8 | 7.3 | 7.0 | 7.1 | 7.5 | 9.5 | 4.8 | 4.7 |
| tan δ | 0.11 | 0.102 | 0.1 | 0.127 | 0.121 | 0.145 | 0.165 | 0.184 | 0.085 | 0.172 |
| Elongation at break EB (%) | 280 | 300 | 320 | 230 | 300 | 270 | 340 | 160 | 400 | 470 |
| Run-flat durability index | 140 | 145 | 145 | 135 | 135 | 120 | 115 | 105 | 85 | 75 |

TABLE 2

| | Examples | | | Comparative Examples | | | | | |
|---|---|---|---|---|---|---|---|---|---|
| | 6 | 7 | 8 | 6 | 7 | 8 | 9 | 10 | 11 |
| Carcass cord | Aramid | Aramid | Aramid | Rayon | Rayon | Rayon | Rayon | Aramid | Aramid |
| Compounding type | LRR | LRR | LRR lower limit | LRR | LRR | LRR lower limit | Normal | Normal | Low E*, High tanδ |
| Compounding detail (parts by weight) | | | | | | | | | |
| BR1250H | 20 | - | - | 20 | 40 | - | - | - | - |
| S-modified BR | - | 20 | - | - | - | - | - | - | - |
| VCR 617 | 45 | 45 | - | 45 | 25 | - | - | 65 | - |
| High cis BR | - | - | 65 | - | - | 65 | 65 | - | 65 |
| NR | 35 | 35 | 35 | 35 | 35 | 35 | 35 | 35 | 35 |
| Carbon N330 | 40 | 40 | 50 | 60 | 60 | 50 | 70 | 70 | 70 |
| Silica Z115Gr | 20 | 20 | 10 | - | - | 10 | - | - | - |
| Silane coupling agent | 1.6 | 1.6 | 0.8 | - | - | 0.8 | - | - | - |
| Insoluble sulfur (oil 10 % included) | 2.33 | 2.33 | 2.33 | 2.33 | 2.33 | 2.33 | 2.33 | 2.33 | 1.6 |
| Vulcanization accelerator TBBS | 2 | 2 | 2 | 2 | 2 | 2 | 2 | 1.4 | 2 |
| Aroma oil | 8 | 8 | 8 | 8 | 8 | 8 | 8 | 8 | 8 |
| Zinc oxide | 2.5 | 2.5 | 2.5 | 2.5 | 2.5 | 2.5 | 2.5 | 2.5 | 2.5 |
| Stearic acid | 2 | 2 | 2 | 2 | 2 | 2 | 2 | 2 | 2 |
| Antioxidant 6C | 3 | 3 | 3 | 3 | 3 | 3 | 3 | 3 | 3 |
| Evaluation result | | | | | | | | | |
| E* 70°C | 6.8 | 6.7 | 5.7 | 7.2 | 6.8 | 5.7 | 7.1 | 7.5 | 4.7 |
| tan δ | 0.105 | 0.11 | 0.128 | 0.11 | 0.102 | 0.128 | 0.145 | 0.165 | 0.172 |
| Elongation at break EB (%) | 340 | 350 | 370 | 280 | 300 | 370 | 270 | 340 | 470 |
| Run-flat durability index | 145 | 143 | 126 | 108 | 111 | 103 | 100 | 97 | 61 |

**Claims**

1. A run-flat tire (1A) equipped with a carcass (6) from a tread part (2) to the bead core (5) of a bead part (4) through a sidewall part (3), a belt layer (9) provided at the inside of the tread part and the radial outside of the carcass, a side-reinforcing rubber layer (11) with sectional falcate shape provided at the inside of the sidewall part and carcass and extending from a central part having the maximum thickness to the inside and outside of radial direction decreasing thickness and a clinch part brought in contact with the rim flange of a metal wheel at a zone from the sidewall part to the bead part,
wherein the carcass comprises a carcass ply (6A) in which carcass cords arranged at an angle of 70 to 90° for tire circumferential direction are covered with topping rubber, aramid fiber cords are used for the carcass cords, and the rubber physical properties of the clinch part are a tan $\delta$ of at most 0.13 measured at a temperature of 70°C and a dynamic distortion of 2 % and a complex elastic modulus E* of 5.0 to 10.0 Mpa.

2. The run-flat tire of Claim 1, comprising a rubber composition for clinch wherein the clinch part comprises a rubber component comprising

   (a) 10 to 60 % by weight of a polybutadiene rubber comprising 2.5 to 20 % by weight of a 1,2-syndiotactic polybutadiene crystal,
   (b) 5 to 40 % by weight of a tin-modified polybutadiene rubber in which it is polymerized by a lithium initiator, a content of tin atom is 50 to 3000 ppm, a vinyl bond amount is 5 to 50 % by weight and a molecular weight distribution (Mw/Mn) is at most 2 and
   (c) 20 to 75 % by weight of a rubber other than (a) and (b).

3. The run-flat tire of Claim 1 or 2, wherein the carcass cords have a double twisting structure, wherein 2 filament bundles lower twisted are mutually twisted with upper twisting.

4. The run-flat tire of Claim 1, 2 or 3, wherein the carcass cords have a twisting coefficient T represented by the following formula (1) set in the range of 0.5 to 0.7:

$$T = N \times \sqrt{\{(0.125 \times D/2)/\rho\}} \times 10^{-3} \qquad (1)$$

(wherein N is upper twisting number (cycle/ 10 cm), D is total indication decitex (fineness) and $\rho$ is the specific gravity of cord material).

5. The run-flat tire of Claim 4, wherein the carcass cords have a twisting coefficient T in the range of 0.6 to 0.7.

6. The run-flat tire of any one of Claims 1 to 5, wherein the topping rubber of the carcass ply has a complex elastic modulus E* set in the range of 5.0 to 13 Mpa.

7. The run-flat tire of any one of Claims 1 to 6, wherein it is a run-flat tire equipped with the side-reinforcing rubber layer with sectional falcate shape provided at the sidewall part and carcass and extending from a central part having the maximum thickness to the inside and outside of radial direction decreasing thickness.

8. The run-flat tire of any one of Claims 1 to 7, wherein the profile of the tire outer face is formed by curved surface comprising a plurality of arcs in which a curvature radius is gradually decreased from a tire equatorial point CP being the intersection of the tire outer face with the tire equatorial face C to earth edge side.

9. The run-flat tire of Claim 8,
wherein the profile of the tire outer face satisfies relation that when a point on the tire outer face separated from tire equatorial face C by a distance of 45 % of tire maximum sectional width SW is referred to as P, the curvature radius RC of the tire outer face is gradually decreased from the tire equatorial point CP to the point P and when respective radial distances between the tire equatorial point CP and respective points on the tire outer face respectively separating the distances X60, X75, X90 and X100 of 60 %, 75 %, 90 % and 100 % of half width (SW/2) of the tire maximum sectional width SW from the tire equatorial face C are referred respectively to as Y60, Y75, Y90 and Y100 and when the tire sectional height is referred to as SH,
$0.05 < Y60/SH \leq 0.1$

$0.1 < Y75/SH \leq 0.2$
$0.2 < Y90/SH \leq 0.4$
$0.4 < Y100/SH \leq 0.7$.

**10.** The run-flat tire of any one of Claims 1 to 6, wherein the profile of the tire outer face is that the curvature radius at an earth edge side is larger than a curvature radius at the tire equatorial point CP being the intersection of the tire outer face with the tire equatorial face C.

## Patentansprüche

**1.** Notlaufreifen (1A), der mit einer Karkasse (6) von einem Laufflächenteil (2) zu dem Wulstkern (5) eines Wulstteils (4) durch einen Seitenwandteil (3), einer Gürtelschicht (9), die an der Innenseite des Laufflächenteils und der radialen Außenseite der Karkasse vorgesehen ist, einer Seitenverstärkungskautschukschicht (11) mit einer im Schnitt sichelförmigen Form, die an der Innenseite des Seitenwandteils und der Karkasse vorgesehen ist und sich von einem zentralen Teil, der die maximale Dicke aufweist, zu der Innenseite und Außenseite mit in radialer Richtung abnehmender Dicke erstreckt, und einen Abriebstreifenteil, der mit dem Felgenhorn eines Metallrades an einer Zone von dem Seitenwandteil zu dem Wulstteil in Kontakt gebracht ist, ausgestattet ist,
wobei die Karkasse eine Karkasslage (6A) umfasst, in welcher Karkasskorde, die unter einem Winkel von 70 bis 90° zur Reifenumfangsrichtung angeordnet sind, mit Gummierungskautschuk bedeckt sind, wobei Aramidfaserkorde für die Karkasskorde verwendet sind, und
wobei die physikalischen Eigenschaften des Kautschuks des Abriebstreifenteils ein tan $\delta$ von höchstens 0,13, gemessen bei einer Temperatur von 70°C, und eine dynamische Verwindung von 2 % und ein komplexer Elastizitätsmodul E* von 5,0 bis 10,0 MPa sind.

**2.** Notlaufreifen nach Anspruch 1,
der eine Kautschukmischung für den Abriebstreifen umfasst, wobei der Abriebstreifenteil eine Kautschukkomponente umfasst mit

(a) 10 bis 60 Gew.-% eines Polybutadienkautschuks, der 2,5 bis 20 Gew.-% eines syndiotaktischen 1,2-Polybutadienkristalls umfasst,
(b) 5 bis 40 Gew.-% eines mit Zinn modifizierten Polybutadienkautschuks, in welchem dieser durch einen Lithiuminitiator polymerisiert ist, wobei ein Zinnatomgehalt 50 bis 3000 ppm beträgt, eine Menge an Vinylbindungen 5 bis 50 Gew.-% beträgt, und eine Molekulargewichtsverteilung (Mw/Mn) höchstens 2 beträgt, und
(c) 20 bis 75 Gew.-% eines anderen Kautschuks als (a) und (b).

**3.** Notlaufreifen nach Anspruch 1 oder 2,
wobei die Karkasskorde eine Doppelverdrehungsstruktur aufweisen, wobei 2 Filamentbündel, die eine untere Verdrehung aufweisen, wechselseitig mit einer oberen Verdrehung verdreht sind.

**4.** Notlaufreifen nach Anspruch 1, 2 oder 3,
wobei die Karkasskorde einen Verdrehungskoeffizienten T aufweisen, der durch die folgende Formel (1) dargestellt ist, die im Bereich von 0,5 bis 0,7 festgelegt ist:

$$T = N \times \sqrt{\{(0{,}125 \times D/2)/\rho\}} \times 10^{-3} \qquad (1)$$

(wobei N die obere Verdrehungszahl (Zyklen/ 10 cm) ist, D der Gesamtangabe-Dezitex (Feinheit) ist und $\rho$ die Dichte des Kordmaterials ist).

**5.** Notlaufreifen nach Anspruch 4,
wobei die Karkasskorde einen Verdrehungskoeffizienten T im Bereich von 0,6 bis 0,7 aufweisen.

**6.** Notlaufreifen nach einem der Ansprüche 1 bis 5,
wobei der Gummierungskautschuk der Karkasslage einen komplexen Elastizitätsmodul E* aufweist, der im Bereich von 5,0 bis 13 MPa festgelegt ist.

**7.** Notlaufreifen nach einem der Ansprüche 1 bis 6,
wobei dieser ein Notlaufreifen ist, der mit der Seitenverstärkungskautschukschicht mit einer im Schnitt sichelförmigen Form ausgestattet ist, die an dem Seitenwandteil und der Karkasse vorgesehen ist und sich von einem zentralen Teil, der die maximale Dicke aufweist, zu der Innenseite und Außenseite mit in radialer Richtung abnehmender Dicke erstreckt.

**8.** Notlaufreifen nach einem der Ansprüche 1 bis 7,
wobei das Profil der Reifenaußenfläche durch eine gekrümmte Oberfläche gebildet ist, die mehrere Bögen umfasst, in denen ein Krümmungsradius von einem Reifenäquatorialpunkt CP, der der Schnittpunkt der Reifenaußenfläche mit der Reifenäquatorialebene C ist, zu der Erdrandseite allmählich abnimmt.

**9.** Notlaufreifen nach Anspruch 8,
wobei das Profil der Reifenaußenfläche eine Relation erfüllt, dass, wenn ein Punkt an der Reifenaußenfläche, der von der Reifenäquatorialfläche C eine Distanz von 45 % der maximalen Querschnittsbreite SW des Reifens getrennt ist, als P bezeichnet wird, der Krümmungsradius RC der Reifenaußenfläche allmählich von dem Reifenäquatorialpunkt CP bis zu dem Punkt P abnimmt, und wenn jeweilige radiale Abstände zwischen dem Reifenäquatorialpunkt CP und jeweiligen Punkten an der Reifenaußenfläche, die jeweils die Abstände X60, X75, X90 und X 100 von 60 %, 75 %, 90 % und 100 % einer Halbbreite (SW/2) der maximalen Querschnittsbreite SW des Reifens von der Reifenäquatorialfläche C trennen, jeweils als Y60, Y75, Y90 und Y100 bezeichnet werden, und wenn die Reifenquerschnittshöhe als SH bezeichnet wird,
$0,05 < Y60/SH \leq 0,1$
$0,1 < Y75/SH \leq 0,2$
$0,2 < Y90/SH \leq 0,4$
$0,4 < Y100/SH \leq 0,7$.

**10.** Notlaufreifen nach einem der Ansprüche 1 bis 6,
wobei das Profil der Reifenaußenfläche derart ist, dass der Krümmungsradius an einer Erdrandseite größer ist als ein Krümmungsradius an dem Reifenäquatorialpunkt CP, der die Schnittlinie der Reifenaußenfläche mit der Reifenäquatorialfläche C ist.

**Revendications**

**1.** Pneumatique de roulement à plat (11) équipé d'une carcasse (6) depuis une partie bande de roulement (2) jusqu'à la tringle de bourrelet (5) d'une partie bourrelet (4) par l'intermédiaire d'une partie paroi latérale (3), d'une couche d'armature (9) prévue à l'intérieur de la partie bande de roulement et à l'extérieur radial de la carcasse, d'une couche de caoutchouc de renforcement latéral (11) falciforme en coupe prévue à l'intérieur de la partie paroi latérale et de la carcasse et s'étendant depuis une partie centrale ayant l'épaisseur maximale jusqu'à l'intérieur et l'extérieur d'épaisseur diminuant dans la direction radiale et d'une partie talon mise en contact avec le bord de jante d'une roue métallique au niveau d'une zone depuis la partie paroi latérale jusqu'à la partie bourrelet,
où la carcasse comprend une nappe de carcasse (6A) dans laquelle des câbles de carcasse disposés à un angle de 70 à 90° pour la direction circonférentielle du pneumatique sont recouverts de caoutchouc de sommet, des câbles en fibres d'aramide sont utilisés pour les câbles de carcasse, et
les propriétés physiques de caoutchouc de la partie talon sont une tan $\delta$ d'au plus 0,13 mesurée à une température de 70°C et une distorsion dynamique de 2 % et un module élastique complexe E* de 5,0 à 10,0 Mpa.

**2.** Pneumatique de roulement à plat selon la revendication 1 comprenant une composition de caoutchouc pour le talon où la partie talon comprend un composant caoutchouc comprenant

(a) 10 à 60 % en poids d'un caoutchouc de polybutadiène comprenant 2,5 à 20 % en poids d'un cristal de polybutadiène 1,2-syndiotactique,
(b) 5 à 40 % en poids d'un caoutchouc de polybutadiène modifié à l'étain dans lequel il est polymérisé par un initiateur au lithium, une teneur d'atomes d'étain est 50 à 3 000 ppm, une quantité de liaisons vinyliques est 5 à 50 % en poids et une distribution de masse moléculaire (Mp/Mn) est d'au plus 2 et
(c) 20 à 75 % en poids d'un caoutchouc différent de (a) et (b).

**3.** Pneumatique de roulement à plat selon la revendication 1 ou 2, où les câbles de carcasse ont une structure à double torsion, où 2 faisceaux de filaments soumis à une torsion inférieure sont soumis à une torsion mutuelle avec une

torsion supérieure.

4. Pneumatique de roulement à plat selon la revendication 1, 2 ou 3, où les câbles de carcasse ont un coefficient de torsion T représenté par la formule (1) suivante fixé dans la plage de 0,5 à 0,7 :

$$T = N \times \sqrt{\{(0,125 \times D/2)/\rho\}} \times 10^{-3} \qquad (1)$$

(où N est le nombre de torsions supérieures (cycle/10 cm), D est l'indication en decitex totale (finesse) et ρ est la densité du matériau des câbles).

5. Pneumatique de roulement à plat selon la revendication 4, où les câbles de carcasse ont un coefficient de torsion T dans la plage de 0,6 à 0,7.

6. Pneumatique de roulement à plat selon l'une quelconque des revendications 1 à 5, où le caoutchouc de sommet de la nappe de carcasse a un module élastique complexe E* fixé dans la plage de 5,0 à 13 Mpa.

7. Pneumatique de roulement à plat selon l'une quelconque des revendications 1 à 6, où il s'agit d'un pneumatique de roulement à plat équipé de la couche de caoutchouc de renforcement latéral falciforme en coupe prévue au niveau de la partie paroi latérale et de la carcasse et s'étendant depuis une partie centrale ayant l'épaisseur maximale jusqu'à l'intérieur et l'extérieur d'épaisseur diminuant dans la direction radiale.

8. Pneumatique de roulement à plat selon l'une quelconque des revendications 1 à 7, où le profil de la face externe du pneumatique est formé par une surface incurvée comprenant une pluralité d'arcs où un rayon de courbure est diminué progressivement depuis un point équatorial du pneumatique CP qui est l'intersection de la face externe du pneumatique avec la face équatoriale du pneumatique C jusqu'à un côté bord de la terre.

9. Pneumatique de roulement à plat selon la revendication 8, où le profil de la face externe du pneumatique satisfait une relation selon laquelle, quand un point sur la face externe du pneumatique séparé de la face équatoriale du pneumatique C par une distance de 45 % de la largeur en coupe maximale du pneumatique SW est appelé P, le rayon de courbure RC de la face externe du pneumatique est progressivement diminué depuis le point équatorial du pneumatique CP jusqu'au point P et quand les distances radiales respectives entre le point équatorial du pneumatique CP et les points respectifs sur la face externe du pneumatique séparant respectivement les distances X60, X75, X90 et X100 de 60 %, 75 %, 90 % et 100 % de la demi-largeur (SW/2) de la largeur en coupe maximale du pneumatique SW depuis la face équatoriale du pneumatique C sont appelées respectivement Y60, Y75, Y90 et Y100 et quand la hauteur en coupe du pneumatique est appelée SH,
$0,05 < Y60/SH \leq 0,1$
$0,1 < Y75/SH \leq 0,2$
$0,2 < Y90/SH \leq 0,4$
$0,4 < Y100/SH \leq 0,7$.

10. Pneumatique de roulement à plat selon l'une quelconque des revendications 1 à 6, où le profil de la face externe du pneumatique est tel que le rayon de courbure au niveau d'un côté bord de la terre est supérieur à un rayon de courbure au niveau du point équatorial du pneumatique CP qui est l'intersection de la face externe du pneumatique avec la face équatoriale du pneumatique C.

FIG. 1

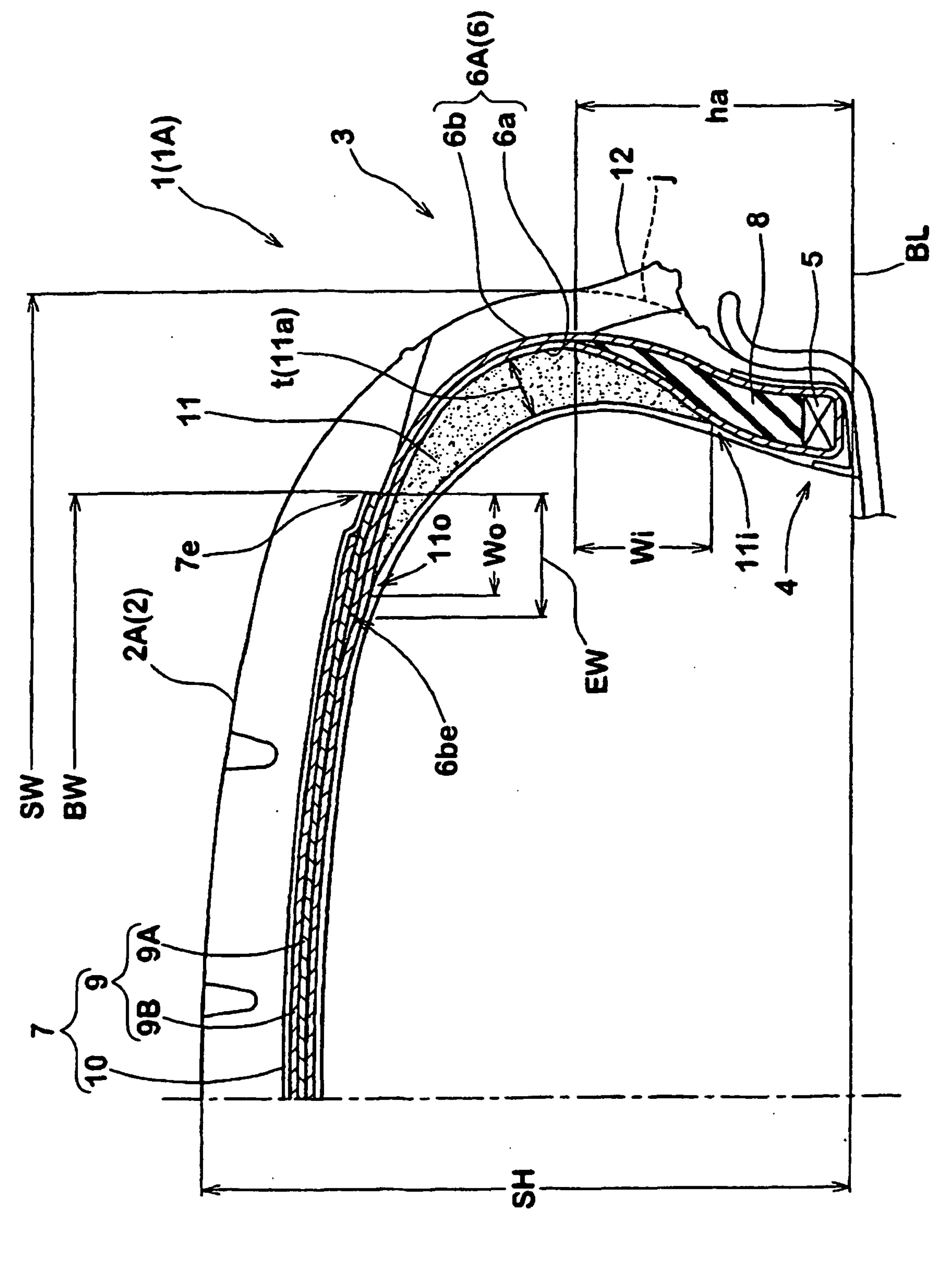
1(1A)
3
6b
6a
6A(6)
ha
12
j
8
5
BL
t(11a)
11
7e
11o
Wo
Wi
11i
4
EW
2A(2)
6be
SW
BW
9A
9
9B
7
10
SH

FIG. 2

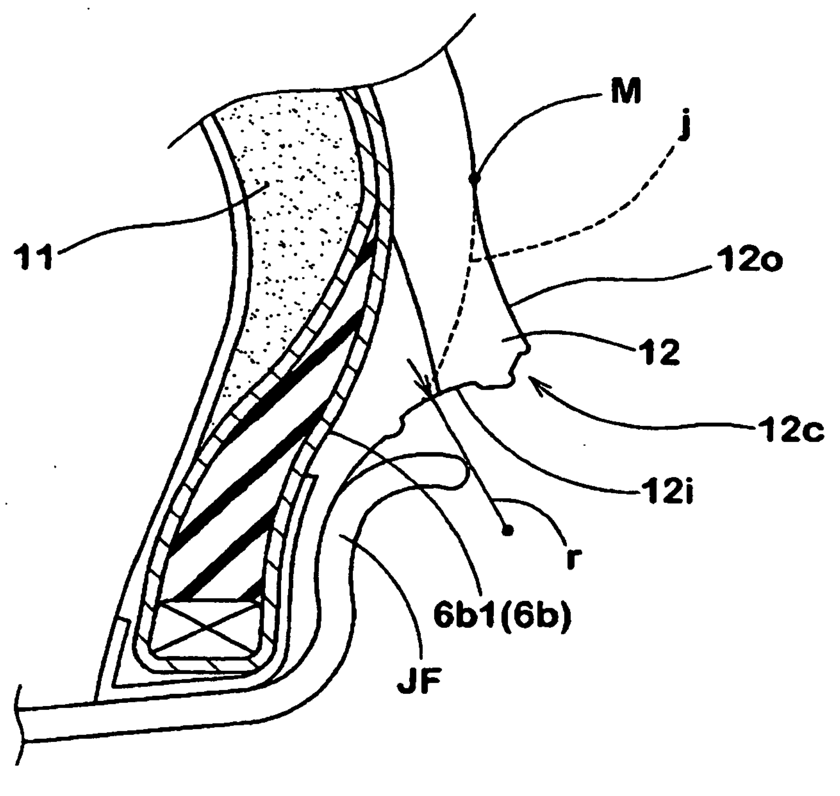

FIG. 3

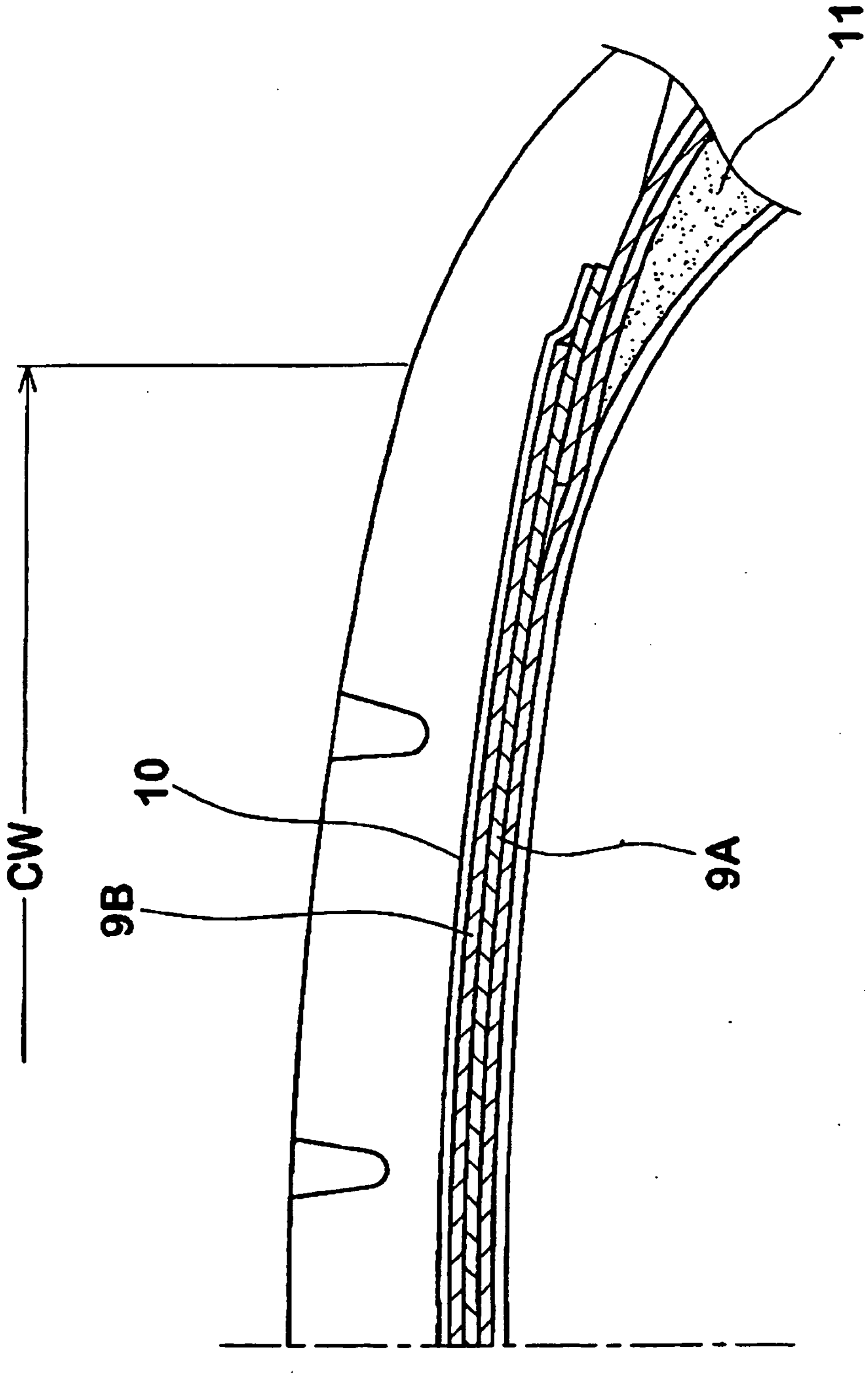

FIG. 4

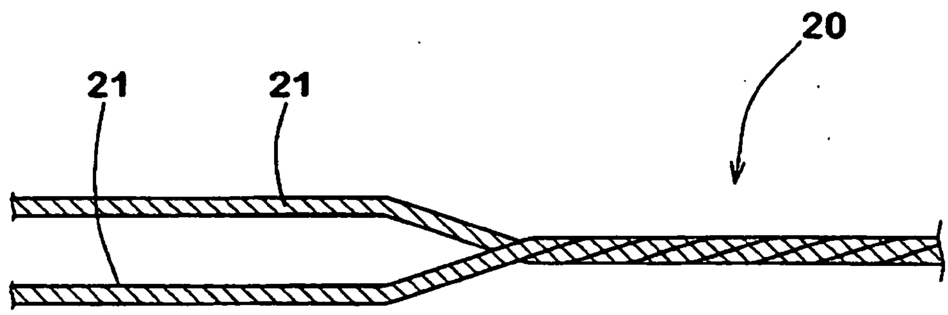

FIG. 5

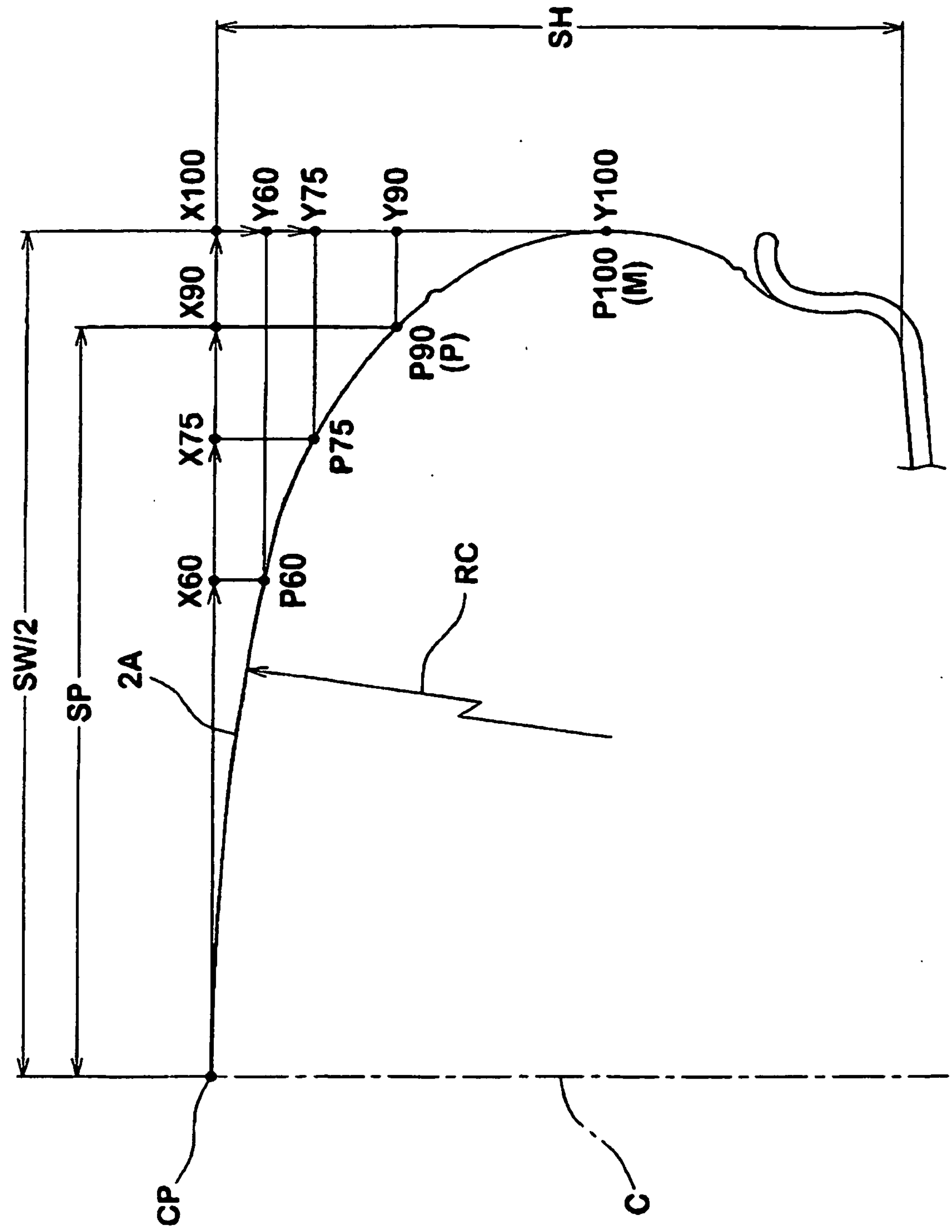
SH
X100
Y60
Y75
Y90
Y100
X90
P100
(M)
P90
(P)
X75
P75
X60
P60
RC
SW/2
SP
2A
CP
C

FIG. 6

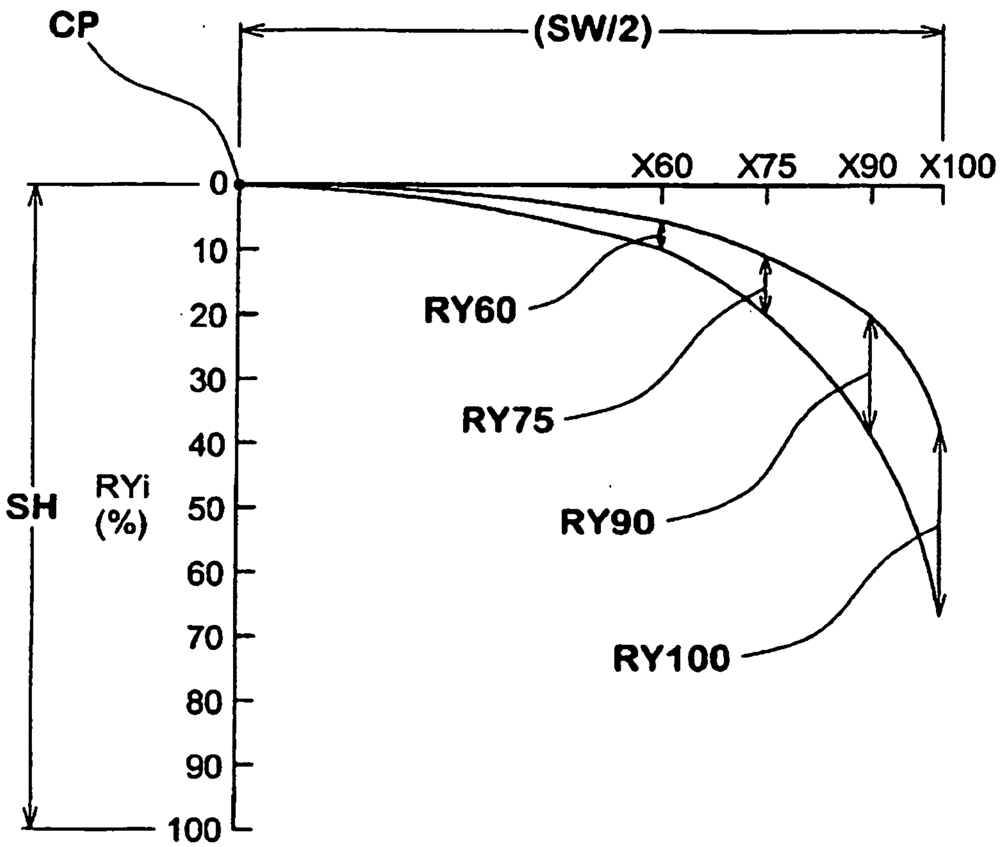
CP
(SW/2)
X60
X75
X90
X100
0
10
20
30
40
50
60
70
80
90
100
SH
RYi
(%)
RY60
RY75
RY90
RY100

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000351307 A
- JP 2007176436 A
- JP 2994989 B